# EUROPEAN PATENT APPLICATION

(11) **EP 1 701 070 A1**
(43) Date of publication of application: **13.09.2006**
(21) Application number: 05005012.9
(22) Date of filing: 08.03.2005
(51) Int. Cl.: F16J 15/32

(54) **Sealing device**

(71) Applicant: Carl Freudenberg KG, 69469 Weinheim (DE)
(72) Inventor: Tanida, Masayuki, Fukushima-shi 960-1193 Fukushima (JP)

(57) **Abstract**

The invention provides a sealing device which can maintain a desired sealing performance of a seal lip on the basis of a screw pump effect for a long period. In a sealing device (1) in which a seal lip (14) is tightly brought into slidable contact with a rotating body (3), the seal lip (14) is constituted by a plurality of plane washer shaped sheets (141) overlapping in a tightly contact state in an axial direction. Accordingly, it is possible to obtain an improved following performance with respect to an eccentric motion (an axial vibration) of the rotating body (3) by making a thickness of each of the sheets (141) thin even if the seal lip (14) is made of a material being lack in an elasticity. Annular grooves (14a, 14a, ...) effective for damping a leaking pressure are formed between inner peripheral edges (141a, 141a, ...) of the respective sheets (141), and the annular grooves (14a, 14a, ...) do not disappear due to an abrasion of the inner peripheral edge (141a).

## Description

### BACKGROUND OF THE INVENTION

### Field of the Invention

The present invention relates to a sealing device executing a sealing of a rotating part by a seal lip.

### Description of the Related Art

In a sealing device executing a sealing of a periphery of a rotating shaft by a seal lip, for example, the sealing device used under a condition of a high speed rotation, a high temperature, a high pressure or the like, there is employed a seal lip formed by a low friction synthetic resin material such as Poly Tetra Fluoro Ethylene (PTFE) resin which is excellent in a heat resistance and an abrasion resistance in comparison with a rubber elastic material, and has a low friction coefficient. However, since the synthetic resin material such as the PTFE is lack in an elasticity in comparison with the rubber elastic material, and is low in a following performance with respect to an eccentric motion (a shaft vibration) of a rotating shaft, there is a problem that a leakage tends to be generated in comparison with the seal lip made of the rubber elastic material.

In this case, there has been known a structure in which a helical groove processing is applied to this kind of synthetic resin seal lip, for example, as described in Japanese Unexamined Patent Publication No. 7-332501 and Japanese Unexamined Patent Publication No. 2000-18393, for the purpose of compensating an eccentric following performance of the synthetic resin seal lip and improving a sealing performance obtained by a screw pumping effect.

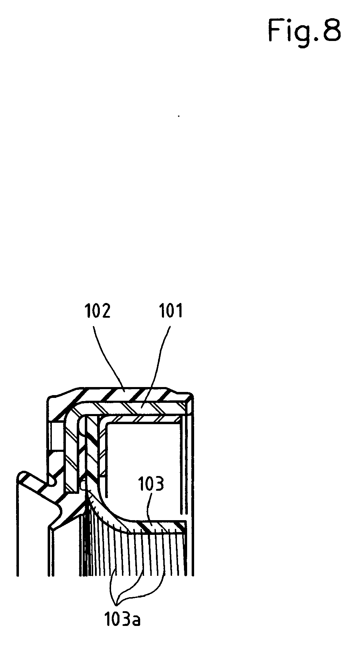

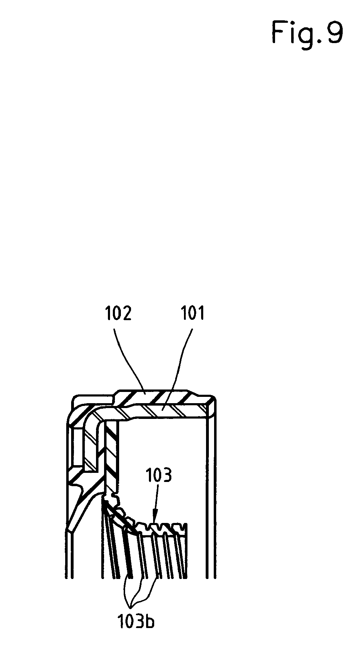

Fig. 8 is a half cross sectional view showing a sealing device in accordance with the prior art which is the same kind as the art described in Japanese Unexamined Patent Publication No. 7-332501, by cutting a plane passing through an axis thereof, and Fig. 9 is a half cross sectional view showing a sealing device in accordance with the other prior art which is the same kind as the art described in Japanese Unexamined Patent Publication No. 2000-18393, by cutting a plane passing through an axis thereof. The sealing devices have a structure in which the sealing device is pressure inserted to an inner periphery of a housing in a fixing part 102 made of a rubber elastic material in an outer periphery of an outer ring 101, and a seal lip 103 made of a synthetic resin and tightly brought into slidable contact with an outer peripheral surface of a rotating shaft is held in an inner periphery of the outer ring 101.

In these devices, in the sealing device shown in Fig. 8 (Japanese Unexamined Patent Publication No. 7-332501), a helical slit 103a having a diagonal cut is formed from an inner peripheral surface (a sliding surface with a rotating shaft) of the seal lip 103 to a back surface of a curved lumber part. Further, the sealing device shown in Fig. 9 (Japanese Unexamined Patent Publication No. 2000-18393) is formed in an accordion shape by arranging a helical groove 103b formed by a press molding from a tip point part of the seal lip 103 to a curved lumber part. Further, a rigidity of the synthetic resin seal lip 103 is lowered on the basis of the helical slit 103a or the helical groove 103b mentioned above, whereby a shaft eccentric following performance can be secured, and a desired sealing performance can be obtained on the basis of a screw pump effect of pressing back a fluid which is going to pass through the sliding surface with the rotating shaft to the sealed space side.

### SUMMARY OF THE INVENTION

However, the helical slit 103a as shown in Fig. 8 (Japanese Unexamined Patent Publication No. 7-332501) or the helical groove 103b as shown in Fig. 9 (Japanese Unexamined Patent Publication No. 2000-18393) becomes smaller due to an abrasion with time of the inner peripheral surface of the seal lip 103 caused by the sliding with the rotating shaft, the collapse under the high pressure condition or the like, can not obtain the desired sealing performance on the basis of the screw pump effect, and reaches the generation of the leakage,

The present invention is made by taking the points mentioned above into consideration, and a technical object of the present invention is to provide a sealing device which can maintain a desired sealing performance of a seal lip for a long period.

### Means for Solving the Problem

As a means for effectively achieving the technical object mentioned above, in accordance with a first aspect of the present invention, there is provided a sealing device in which a seal lip is comprised of a plurality of plane washer shaped sheets stacked in a state of being tightly brought into contact with each other in the axial direction, and tip point of edge of each sheet is made to be tightly brought into slidable contact with a rotating body.

Further, in accordance with a second aspect of the present invention, there is provided a sealing device in which a seal lip is comprised of a plurality of plane washer shaped sheets stacked in a state of being tightly brought into contact with one another in the axial direction; helical end edge of each sheet is made to be tightly brought into slidable contact with rotating body.

Further, in accordance with a third aspect of the present invention, there is provided a sealing device as recited in the first aspect of the second aspect, wherein the sheets are tightly brought into slidable contact with an outer peripheral surface of the rotating body in its inner peripheral edges, in a state where the more it comes close to the side ofi sealed space, the smaller the diameter is.

In accordance with the sealing device on the basis of the first aspect of the present invention, it is possible to improve a following performance with respect to a relative eccentric motion of the rotating body by reducing a thickness of each of the sheets structuring the seal lip. Further, since an annular groove corresponding to an end part of an overlapping part of each of the sheets is formed in a sliding part of the seal lip, and the annular groove damps the leaking pressure, an excellent sealing performance can be achieved. Further, since the annular groove does not disappear due to the abrasion of the sheet caused by the sliding with the rotating body, it is possible to maintain the excellent sealing performance for a long period.

In accordance with the sealing device on the basis of the second aspect of the present invention, it is possible to improve a following performance of the seal lip with respect to a relative eccentric motion of the rotating body by reducing a thickness of the helical sheet. Further, since the helical groove corresponding to the end part of the overlapping part of the helical sheets is formed in the sliding part of the seal lip, and the helical groove achieves the screw pump effect on the basis of the rotation, an excellent sealing performance can be achieved. Further, since the helical groove does not disappear due to the abrasion of the sheet caused by the sliding with the rotating body, it is possible to maintain the excellent sealing performance for a long period.

In accordance with the sealing device on the basis of the third aspect of the present invention, since an improved tightly contact state of the sheet with respect to the outer peripheral surface of the rotating body can be secured by making the diameter of the inner peripheral edge of the sheet tightly brought into contact with the outer peripheral surface of the rotating body in the inner peripheral edge smaller toward the sealed space, the excellent sealing performance can be achieved.

### BRIEF DESCRIPTION OF THE DRAWINGS

Fig. 1 is a half cross sectional view showing a sealing device in accordance with a first embodiment of the present invention, by cutting a plane passing through an axis thereof:
Fig. 2 is a cross sectional view of an unattached state showing the sealing device in Fig. 1, by cutting the plane passing through the axis;
Fig. 3 is a perspective view showing a synthetic resin sheet in the sealing device in Fig. 1;
Fig. 4 is a half cross sectional view showing a sealing device in accordance with a second embodiment of the present invention, by cutting a plane passing through an axis thereof;
Fig. 5 is a cross sectional view of an unattached state showing the sealing device in Fig. 4, by cutting the plane passing through the axis;
Fig. 6 is a perspective view showing a synthetic resin sheet in the sealing device in Fig. 5;
Fig. 7 is a perspective view showing a processing method of the synthetic resin sheet in the sealing device in Fig. 5;
Fig- 8 is a half cross sectional view showing a sealing device in accordance with the prior art, by cutting a plane passing through an axis thereof; and
Fig. 9 is a half cross sectional view showing a sealing device in accordance with the other prior art, by cutting a plane passing through an axis thereof.

### DESCRIPTION OF THE PREFERRED EMBODIMENT

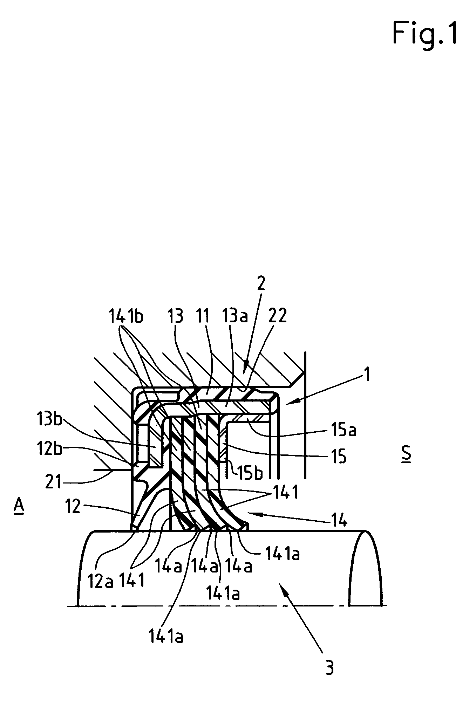

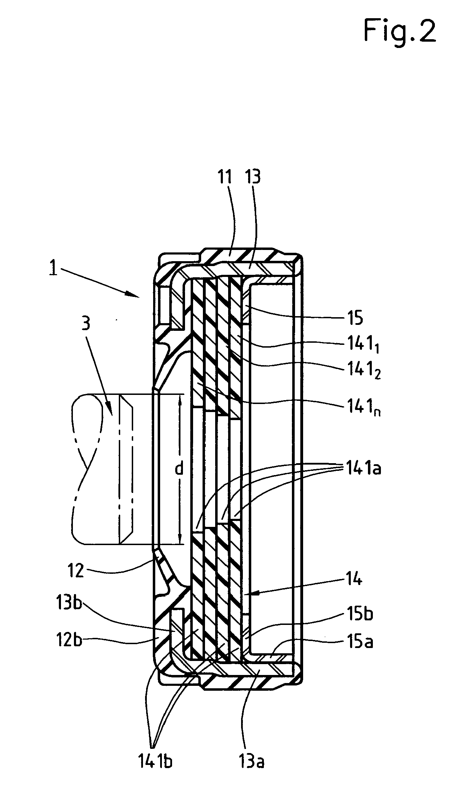

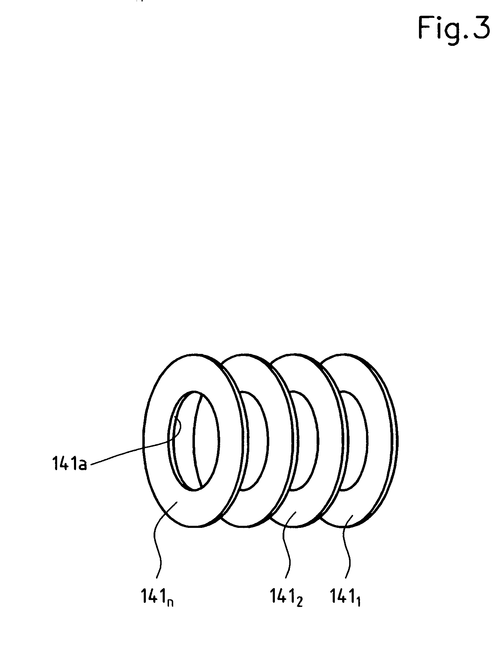

A description will be given below of a preferable embodiment of a sealing device in accordance with the present invention, with reference to the accompanying drawings. First, Fig. 1 is a half cross sectional view showing a sealing device in accordance with a first embodiment, by cutting a plane passing through an axis thereof, Fig. 2 is a cross sectional view of an unattached state showing the sealing device in Fig. 1, by cutting the plane passing through the axis, and Fig. 3 is a perspective view showing a synthetic resin sheet in the sealing device in Fig- 1.

A sealing device 1 shown in Fig. 1 is structured such as to seal an axial peripheral space between a housing 2 of an equipment and a rotating shaft 3 inserted to an axial hole 21 of the housing 2, and prevent a fluid within a sealed space S from leaking to an atmospheric air side A. The rotating shaft 3 corresponds to a rotating body described in claim 1.

In other words, the sealing device 1 is constituted by an outer peripheral seal portion 11 which is pressure inserted and fixed to an inner periphery of a seal attaching portion 22 formed in an expanded manner in an axial hole 21 of a housing 2, a dust lip 12 in which an inner peripheral edge 12a is opposed to an outer peripheral surface of the rotating shaft 3 with a micro gap, a reinforcing ring 13 which is integrally buried astride the outer peripheral seal portion 11 and the dust lip 12, a seal lip 14 with which an inner peripheral edge 141a is tightly brought into slidable contact with an outer peripheral surface of the rotating shaft 3, and a retainer 15 which is provided for fixing the seal lip 14 to an inner periphery of the reinforcing ring 13,

The reinforcing ring 13 is manufactured in accordance with a punching press molding of a metal plate, and is constituted by an outer tube portion 13a and an inward collar part 13b extending to an inner peripheral side from one end thereof, that is, is formed in an approximately L shape in a cross sectional shape obtained by cutting a plane passing through an axis (a cross sectional shape in Figs. 1 and 2). The retainer 15 is also manufactured in accordance with a punching press molding of a metal mold in the same manner as that of the reinforcing ring 13, and is constituted by an inner tube part 15a pressure inserted and fitted to an inner periphery of the outer tube portion 13a of the reinforcing ring 13, and an inward collar portion 15b extending to an inner peripheral side from one end thereof.

The outer peripheral seal portion 11 and the dust lip 12 are made of a rubber elastic material. The outer peripheral seal portion 11 is integrally bonded in a vulcanizing manner to an outer periphery of the outer tube portion 13a of the reinforcing ring 13, and the strip 12 is integrally bonded in a vulcanizing manner to the inward collar portion 13b in a state in which a thick outer peripheral base portion 12b buries the inward collar part 13b of the reinforcing ring 13. In other words, the outer peripheral seal portion 11 and the dust lip 12 is integrally bonded in a vulcanizing manner to the reinforcing ring 13 at the same time of molding, by setting the reinforcing ring 13 to which a vulcanizable adhesive agent is previously applied within a predetermined metal mold (not shown) and filling an unvulcanized rubber material into an annular cavity defined between an inner surface of the metal mold and the reinforcing ring 13 in a mold close state so as to heat and pressurize.

The seal lip 14 is structured such that a plurality of (four in the illustrated embodiment) plane washer shaped synthetic resin sheets 14 are inserted to the inner periphery of the outer tube portion 13a of the reinforcing ring 13 in a state of being tightly lapped over each other in the axial direction, and an outer peripheral portion 141 b is pinched between the outer peripheral base portion 12b of the dust lip 12 and the inward collar portion 15b of the retainer 15 pressure inserted and fitted to the outer tube portion 13a. As shown in Fig. 3, each of the synthetic resin sheets 141 (141, to 144ₙ) is made of Poly Tetra Fluoro Ethylene (PTFE) and corresponds to the sheet described in claim 1, and an inner peripheral edge 141a thereof corresponds to the tip end edge described in claim 1.

In the unattached state shown in Fig. 2, an inner diameter of the synthetic resin sheet 141 (141, to 141ₙ) is smaller than an outer diameter d of the rotating shaft 3, and the inner diameter becomes smaller in accordance that the sheet is positioned close to the retainer 15, in other words, positioned close to the sealed space S in Fig. 1. Accordingly, the inner peripheral portion of each of the synthetic resin sheet 141 is expanded and is deformed in a curved manner so as to be directed to the sealed space S in the attached state shown in Fig. 1, by inserting the rotating shaft 3 from the dust lip 12 side as shown by a two-dot chain line in Fig. 2, and only the inner peripheral edge 141 a of each of the synthetic resin sheet 141 is tightly brought into contact with the outer peripheral surface of the rotating shaft 3.

In accordance with the sealing device 1 on the basis of the first embodiment structured in the manner mentioned above, since the seal lip 14 is constituted by a plurality of plane washer shaped synthetic resin sheets 141 lapped over each other in the tightly contact state in the axial direction, it is possible to secure a flexibility by making each of the synthetic resin sheets 141 thin even in the case that the sheet is made of the material being lack of the elasticity such as the PTFE. Further, in the case that each of the synthetic resin sheets 141 is brought into slidable contact with the rotating shaft in a state in which the inner peripheral portion is bent in a cylindrical shape, for example, as shown in Figs. 8 and 9 described previously, the following performance with respect to the eccentricity is deteriorated. However, in the present invention, since only the inner peripheral edge 141 a of the synthetic resin sheet 141 is tightly brought into contact with the outer peripheral surface of the rotating shaft 3 so as to restrict a bending amount, as shown in Fig. 1, it is possible to obtain an improved following performance with respect to the eccentric motion (the axial vibration) of the rotating shaft 3.

Further, in the attached state shown in Fig. 1, a radius of curvature of the curved inner peripheral portion of the synthetic resin sheet 141 becomes smaller in accordance that the sheet is positioned close to the sealed space S. However, since the synthetic resin sheet 141 is structured such that the inner diameter becomes smaller in the unattached state in accordance that the sheet is positioned close to the sealed space S, each of the inner peripheral edges 141 a can be tightly brought into contact with the outer peripheral surface of the rotating shaft 3 securely.

In the attached state shown in Fig. 1, a plurality of annular grooves 14a, 14a, ... continuously provided in a circumferential direction along the outer peripheral surface of the rotating shaft 3 are formed in the sliding part of the seal lip 14 with respect to the outer peripheral surface of the rotating shaft 3, that is, between the inner peripheral edges 141 a, 141 a, ... of the respective synthetic resin sheets 141. Further, in order to make the sealed fluid in the sealed space S to leak to the atmospheric air side A from the portion between the seal lip 14 and the rotating shaft 3, it is necessary that the sealed fluid altemately passes through the sliding part between the inner peripheral edge 14'I a of the synthetic resin sheet 141 and the rotating shaft 3, and the annular groove 14a. Accordingly, the leaking pressure is damped and it is possible to achieve an excellent sealing function.

Further, it is unavoidable that the inner peripheral edge 141 a of the synthetic resin sheet 141 is worn away with time on the basis of the sliding with the rotating shaft 3, however, even if the abrasion mentioned above is generated, the annular grooves 14a, 14a, ... corresponding to the inner peripheral end of the overlapping portion of the synthetic resin sheets 141, 141, ... are always formed between the sliding portions of the respective synthetic resin sheets 141, and do not disappear. Accordingly, it is possible to maintain the excellent seating performance caused by the leaking pressure damping effect mentioned above for a long period.

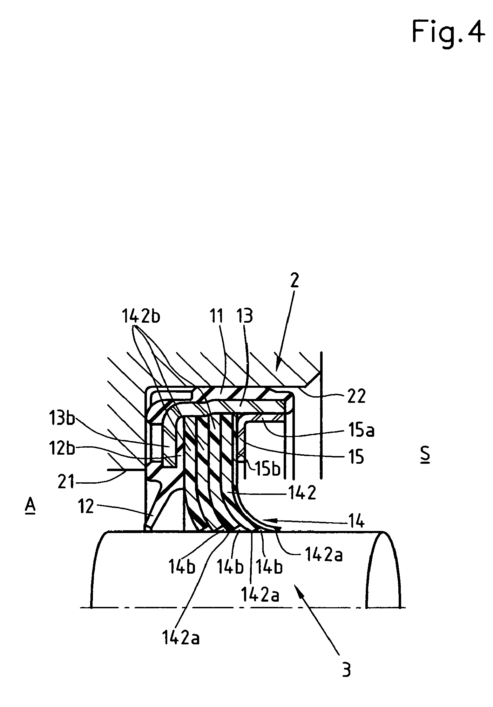

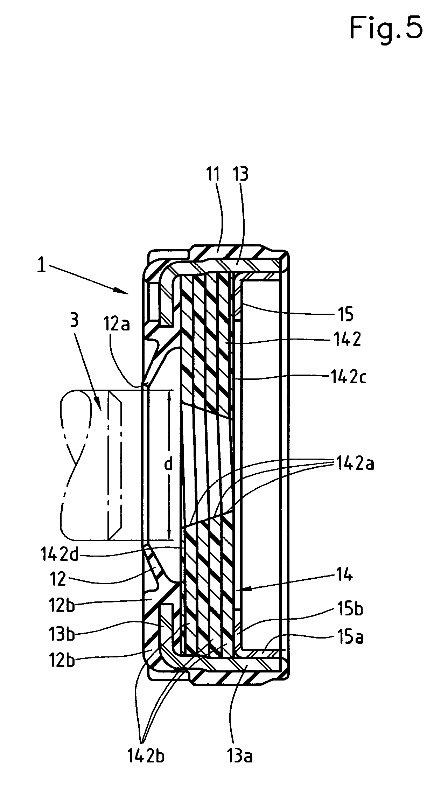

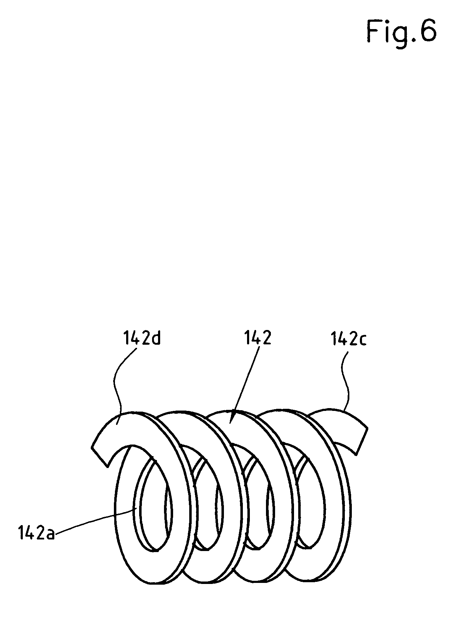

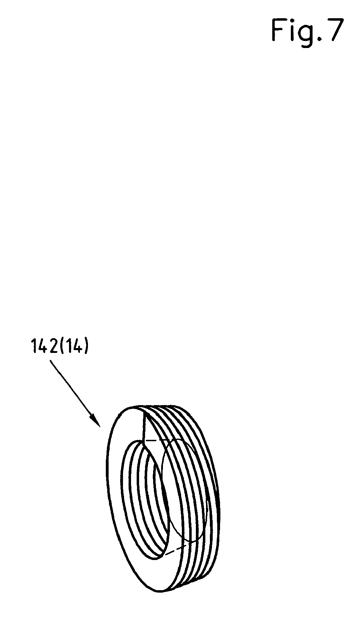

Next, Fig. 4 is a half cross sectional view showing a sealing device in accordance with a second embodiment of the present invention, by cutting a plane passing through an axis thereof, Fig. 5 is a cross sectional view of an unattached state showing the sealing device in Fig. 4, by cutting the plane passing through the axis, Fig. 6 is a perspective view showing a synthetic resin sheet in the sealing device in Fig. 5, and Fig 7 is a perspective view showing a processing method of the synthetic resin sheet in the sealing device in Fig 5.

This embodiment is different from the first embodiment described above in a point that the seal lip 14 is constituted by a helical synthetic resin sheet 142 overlapping in a tight contact state in the axial direction, and the other parts, that is, the outer seal part 11, the dust lip 12, the reinforcing ring 13, the retainer 15 and the like in Figs. 4 and 5 are structured in the same manner as that of Figs. 1 and 2.

The seal lip 14 is structured, as shown in Fig. 6, such that the helical synthetic resin sheet 142 formed in a thin band shape in an axial direction and wound at a plurality of times is inserted to the inner periphery of the outer tube portion 13a of the reinforcing ring 13 as shown in Fig. 5 in a state of being tightly lapped over each other in the axial direction, and an outer peripheral portion 142b is pinched between the outer peripheral base portion 12b of the dust lip 12 and the inward collar part 15b of the retainer 15 pressure inserted and fitted to the outer tube part 13a.

The synthetic resin sheet 142 is made of Poly Tetra Fluoro Ethylene (PTFE) and corresponds to the sheet described in claim 2, and an inner peripheral edge 142a thereof corresponds to the helical end edge described in claim 2. In the unattached state shown in Fig. 5, the helical inner peripheral edge 142a of the synthetic resin sheet 142 has a smaller diameter than the outer diameter d of the rotating shaft 3, and is formed in the smaller diameter progressively toward the retainer 15 side. Accordingly, the inner peripheral portion of the synthetic resin sheet 142 is expanded and is deformed in a curved manner so as to be directed to the sealed space S, as shown in Fig. 4, by inserting the rotating shaft 3 from the dust lip 12 side as shown by a two-dot chain line in Fig. 5, and only the inner peripheral edge 142a of the synthetic resin sheet 142 is tightly brought into contact with the outer peripheral surface of the rotating shaft 3.

The helical synthetic resin sheet 142 can be manufactured, for example, by cutting the annular body made of the PTFE in the spiral shape, as shown in Fig. 7. Accordingly, as shown in Figs, 5 and 6, the helical synthetic resin sheet can be formed in such a manner that peripheral parts 142c and 142d in both ends of the synthetic resin sheet 142 become gradually thin. Accordingly, it is possible to prevent a step from being formed in the contact part between the inward collar part 15b of the retainer 15 and the outer peripheral base portion 12b of the dust lip 12, and it is possible to tightly bring into contact with an entire periphery.

In accordance with the sealing device 1 on the basis of the second embodiment structured in the manner mentioned above, since the seal lip 14 is constituted by the helical synthetic resin sheets 142 lapped over each other in the tightly contact state in the axial direction, it is possible to obtain the improved following performance with respect to the eccentric motion (the axial vibration) of the rotating shaft 3, in the same manner as the first embodiment, by making the synthetic resin sheet 142 thin even in the case that the sheet is made of the material being lack of the elasticity such as the PTFE, and tightly bringing only the inner peripheral edge 142a into contact with the outer peripheral surface of the rotating shaft 3.

Further, in the attached state shown in Fig. 4, a radius of curvature of the curved inner peripheral portion of the synthetic resin sheet 142 becomes smaller toward the sealed space S side. However, since the inner peripheral edge 142a in the unattached state of the synthetic resin sheet 142 is formed in the smaller diameter toward the sealed space S, it is possible to tightly bring the inner peripheral edge 142a into contact with the outer peripheral surface of the rotating shaft 3 securely.

In the attached state shown in Fig. 4, since the inner peripheral part of the synthetic resin sheet 142 is deformed in a curved manner so as to be directed to the sealed space S side, the helical groove 14b is formed along the overlapping part of the inner peripheral edge 142a in the sliding portion of the seal lip 14 with respect to the outer peripheral surface of the rotating shaft 3, on the basis of the helical shape of the synthetic resin sheet 141 structuring the helical groove 14b. Since the helical groove 14b generates a pump pressure (a screw pump effect) for discharging the fluid toward the sealed space S side on the basis of the rotation of the rotating shaft 3, and pushes back the sealed fluid which is going to leak to the atmospheric air side A while passing through the portion between the seal lip 14 and the rotating shaft 3 from the sealed space S to the sealed space S, it is possible to achieve an excellent sealing function.

In this case, it goes without saying that in order to generate the screw pump effect, the helical direction of the synthetic resin sheet 142 is determined in correspondence to the rotating direction of the rotating shaft 3.

Further, it is unavoidable that the inner peripheral edge 142a of the synthetic resin sheet 142 is worn away with time on the basis of the sliding with the rotating shaft 3, however, even if the abrasion mentioned above is generated, the helical groove 14b corresponding to the inner peripheral end of the overlapping portion of the synthetic resin sheet 142 is always formed, and do not disappear, Accordingly, it is possible to maintain the excellent sealing performance caused by the leaking pressure damping effect mentioned above for a long period.

In this case, in each of the embodiments mentioned above, the outer peripheral portions of the synthetic resin sheets 141 and 142 are fixed by the retainer 15, however, may be fixed by an adhesive agent, and the retainer 15 may be omitted.

## Claims

1. A sealing device in which a seal lip (14) is comprised of a plurality of plane washer shaped sheets (141) stacked in a state of being tightly brought into contact with each other in the axial direction; and tip point of edge (141 a) of each sheet (141) is made to be tightly brought into slidable contact with a rotating body (3).

2. A sealing device in which a seal lip (14) is comprised of a plurality of plane washer shaped sheets (141) stacked in a state of being tightly brought into contact with one another in the axial direction; helical end edge (142a) of each sheet (142) is made to be tightly brought into slidable contact with rotating body (3).

3. The sealing device according to claim 1 or 2, wherein the sheets (141, 142) are tightly brought into slidable contact with an outer periphal surface of the rotating body (3) in its inner peripheral edges (141 a, 142a); in a state where the closer it comes to the side of sealed space (S), the smaller the diameter is.
